(19) Europäisches Patentamt
European Patent Office
Office européen des brevets

(11) **EP 2 511 665 B1**

## (12) FASCICULE DE BREVET EUROPEEN

(45) Date de publication et mention
de la délivrance du brevet:
**09.12.2015 Bulletin 2015/50**

(51) Int Cl.:
***F04D 27/00*** *(2006.01)*  ***F04D 29/051*** *(2006.01)*
***F04D 29/058*** *(2006.01)*  ***G01D 5/20*** *(2006.01)*

(21) Numéro de dépôt: **12161592.6**

(22) Date de dépôt: **27.03.2012**

(54) **Dispositif de détection de la position axiale d'un arbre tournant et application à une pompe turbo-moléculaire**

Vorrichtung zur axialen Positionserfassung einer Drehwelle, und Verwendung in einer Turbomolekularpumpe

Device for detecting the axial position of a rotary shaft and use for a turbomolecular pump

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2011 FR 1153227**

(43) Date de publication de la demande:
**17.10.2012 Bulletin 2012/42**

(73) Titulaire: **SKF MAGNETIC MECHATRONICS**
**27950 Saint-Marcel (FR)**

(72) Inventeur: **Schroeder, Ulrich**
**76130 MONT SAINT AIGNAN (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A1- 0 311 128     EP-A1- 0 470 637**
**EP-A1- 1 580 889     WO-A1-2005/038263**
**FR-A1- 2 936 287**

**Description**

Domaine de l'invention

La présente invention concerne un dispositif de détection de la position axiale d'un arbre tournant de machine tournante, comprenant une cible en matériau ferromagnétique disposée à l'extrémité dudit arbre tournant, une bobine d'induction associée à un circuit magnétique fixe rendu solidaire du stator de la machine tournante et disposé en regard de ladite cible en ménageant un entrefer, et un circuit d'alimentation de ladite bobine d'induction.

Art antérieur

On connaît, notamment par les documents WO 2005/038263 A1, EP 0470637 A1 et FR 2936287 A1, une pompe à vide turbo-moléculaire à paliers magnétiques actifs équipée de paliers magnétiques radiaux et d'un palier magnétique axial auquel est associé un détecteur axial.

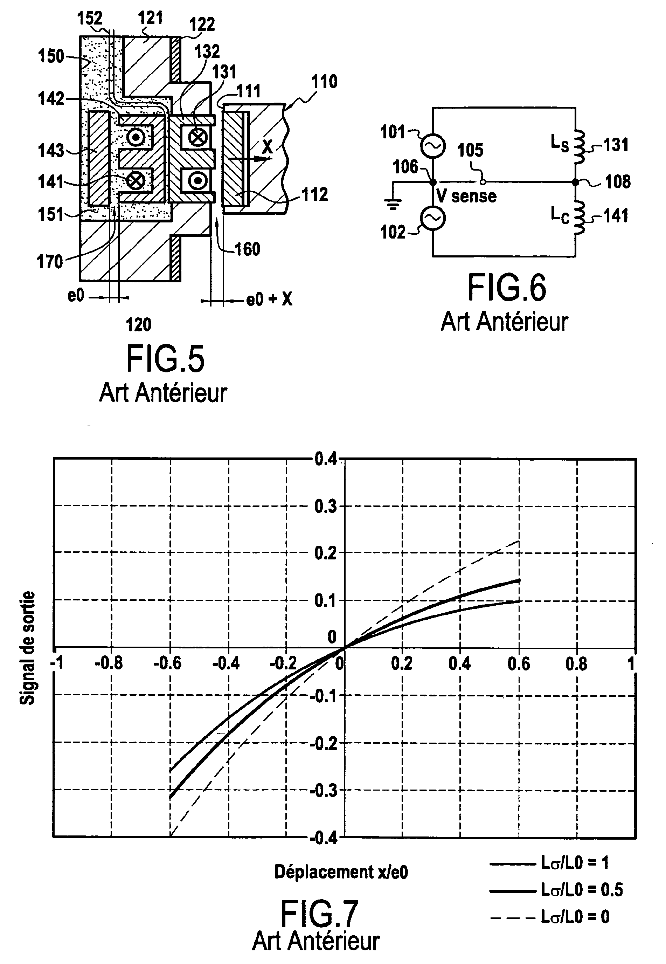

Parmi les détecteurs de détection axiale de type inductif à variation d'inductance destinés à équiper des pompes turbo-moléculaires, on connaît notamment un détecteur axial de type "avec self de compensation" qui sera décrit ci-dessous en référence aux figures 5 à 7.

On voit sur la figure 5 un détecteur axial connu comprenant une cible 112 en ferrite disposée à une extrémité 111 d'un arbre tournant 110. Cette cible 112 montée en bout d'arbre peut être montée sur un écrou de fixation d'un disque radial servant d'armature à un palier magnétique axial.

La partie statorique 120 du détecteur comprend une bobine d'induction 131 associée à un circuit magnétique fixe 132, qui peut être constitué par un pot en ferrite (par exemple de diamètre 14 mm) monté dans un logement 121 rendu solidaire du stator de la machine. L'extrémité libre du circuit magnétique fixe 132 est disposée en regard de la cible 112 en ménageant un entrefer 160 qui peut avoir typiquement un entrefer nominal $e_0$ de 0,5 mm.

La partie statorique 120 du détecteur comprend en outre une bobine d'induction 141 de compensation intégrée dans un circuit magnétique fixe 142, qui peut également être constitué par un pot en ferrite présentant les mêmes dimensions que le circuit magnétique 132. Le circuit magnétique 142, la bobine d'induction de compensation 141 et une pastille en ferrite 143 disposée face au circuit magnétique 142 en ménageant un entrefer 170 fixe présentant la valeur nominale $e_0$, sont disposés selon l'axe de l'arbre 110 de façon symétrique par rapport au circuit magnétique 132, à la bobine d'induction 131 et à la cible 112 (lorsque celle-ci définit l'entrefer nominal $e_0$), par rapport à un plan perpendiculaire à l'axe du rotor 110.

Les fils 152 de connexion des bobines 131 et 141 sont disposés dans un espace 150 qui peut être rempli d'une résine époxy 151.

Une cale pelable 122 en acier inoxydable est montée sur le logement 121 de la partie statorique 120 de détecteur, et présente la forme d'un disque annulaire centré autour de l'axe de l'arbre 110. La cale pelable 122 permet un réglage mécanique destiné à "centrer" le détecteur dans les roulements de secours associés à l'arbre 110.

Comme le montre la figure 6, les bobines d'induction 131 et 141 qui se trouvent déportées de la carte électronique sont alimentées par un montage en pont à partir de deux sources de tension alternative 101, 102, qui, à titre d'exemple, peuvent fournir une tension de 10 V à 25 kHz.

Un point commun 106 aux deux sources de tension d'excitation 101, 102 est relié à la masse tandis que l'autre borne de sortie de chacune des sources de tension d'excitation 101, 102 est reliée respectivement à une extrémité de chacune des bobines 131, 141. Les autres extrémités des bobines 131, 141 sont reliées entre elles en un point 108 d'où un fil 105 permet de prélever une tension de sortie $V_{sense}$ reflétant la variation x de la valeur $e_0 + x$ de l'entrefer axial variable 160 en fonction des variations de position du rotor 110, tandis que la valeur $e_0$ de l'entrefer axial 170 de référence reste fixe.

Si l'inductance de la bobine de détection 131 est désignée par $L_s$, si l'inductance de la bobine de compensation 141 est désignée par $L_c$, si $L_0$ est l'inductance nominale et $L_\sigma$ l'inductance de fuite de chacune des bobines 131 et 141, alors on a les relations suivantes :

$$L_c = L_0 + L_\sigma \qquad\qquad (1)$$

$$L_s = L_0/(1 + x/e_0) + L_\sigma \qquad\qquad (2)$$

Si u est la tension délivrée par chacune des sources de tension 101, 102 et $U_L$ la tension modifiée en fonction de la valeur x du déplacement de l'arbre 110, qui modifie la valeur de l'inductance $L_s$ selon la relation (2) ci-dessus, on a au niveau de la tension de mesure sur le fil de sortie 105 la relation suivante :

$$u_L/u = \frac{x/e_0}{(2L_\sigma/L_0)*(1 + x/e_0) + x/e_0 + 2} \qquad (3)$$

Dans le cas où l'inductance de fuite $L_\sigma$ peut être considérée comme négligeable ($L_\sigma/L_o \ll 1$), on a la relation suivante :

$$u_L/u = \frac{x/e_0}{x/e_0 + 2} \qquad (4)$$

On a représenté sur la figure 7 des courbes donnant la valeur du signal de sortie en fonction du déplacement $x/e_0$ pour 3 cas d"inductance de fuite (relation(3)).

On constate que ces courbes ne sont pas très linéaires, même quand les fuites sont négligeables ($L_\sigma/L_o \ll 1$).

Pour les grands déplacements la non-linéarité devient très importante.

Le détecteur axial connu qui vient d'être décrit en référence aux figures 5 à 7 présente beaucoup d'inconvénients.

La mauvaise linéarité est un premier inconvénient, qui rend tout "centrage électrique" hypothétique et oblige à réaliser un centrage mécanique à l'aide de cales pelables.

La mise en oeuvre d'une bobine de compensation 141 accroît la dimension axiale, c'est-à-dire la longueur du dispositif.

Le nombre de pièces mécaniques à assembler est élevé, ce qui rend l'ajustage complexe et induit un coût élevé.

On connait par ailleurs par les documents EP 1580889 A1 et EP 0311128 A1 des détecteurs de proximité de type inductif à courants de Foucault, qui comprennent au stator une bobine « dans l'air» sans corps magnétique et utilisent une cible sur le rotor qui est un conducteur électrique non magnétique, par exemple en aluminium ou en acier. Dans de tels types de détecteurs, la bobine induit des courants de Foucault dans la cible et l'énergie absorbée varie en fonction de la distance entre la bobine et la cible. On peut alors estimer la position de la cible en mesurant la puissance absorbée par les courants de Foucault dans la cible. Dans de tels systèmes à courants de Foucault, il est nécessaire d'ajuster le décalage et la sensibilité. De plus, ces systèmes mettent en oeuvre des dispositifs à commutation pour réduire la consommation en énergie, ce qui complique la réalisation.

Objet et description succincte de l'invention

La présente invention a pour but de remédier aux inconvénients précités des détecteurs axiaux connus.

L'invention vise en particulier à obtenir une meilleure linéarité de détection, à simplifier la réalisation et par suite à réduire le coût de fabrication d'un détecteur de la position axiale d'un arbre tournant.

Ces buts sont atteints conformément à l'invention, grâce à un dispositif de détection de la position axiale d'un arbre tournant de machine tournante, comprenant une cible en matériau ferromagnétique disposée à l'extrémité dudit arbre tournant, une bobine d'induction associée à un circuit magnétique fixe rendu solidaire d'un bâti de la machine tournante et disposé en regard de la dite cible en ménageant un entrefer, et un circuit d'alimentation de ladite bobine d'induction, **caractérisé en ce que** le circuit d'alimentation de la bobine d'induction comprend une source de tension alternative connectée entre une première extrémité de la bobine d'induction et une zone située à une tension de référence, au moins un condensateur connecté entre ladite première extrémité de la bobine d'induction et une deuxième extrémité de la bobine d'induction, et un dispositif de détection interposé entre ladite deuxième extrémité de la bobine d'induction et ladite zone située à ladite tension de référence, pour fournir sur une ligne une information sur la valeur de courant circulant entre ladite deuxième extrémité de la bobine d'induction et ladite zone située à la tension de référence, ladite information représentant la valeur d'une modification x de la largeur dudit entrefer présentant une valeur nominale prédéterminée $e_0$.

La valeur C de la capacité du condensateur est donnée à partir de l'inductance $L_0$ de la bobine d'induction pour un entrefer à la valeur nominale $e_0$, selon la formule suivante, où $\tilde{\omega}$ représente la pulsation de signal délivré par la source de tension alternative :

$$C = 1/(\varpi^2 L_0)$$

La cible peut être en ferrite ou être constituée par une tôle ferromagnétique ou un empilement de tôles ferromagnétiques.

Le circuit magnétique fixe peut également être en ferrite ou constitué par un empilement de tôles ferromagnétiques.

La source de tension alternative peut être un simple oscillateur sans transformateur.

Selon l'invention, on peut réaliser un centrage électrique mais il n'est plus nécessaire d'effectuer un centrage mécanique, par exemple avec une cale de réglage à peler.

La suppression de la bobine de compensation et de son circuit magnétique associé facilite la réalisation, la mise en oeuvre d'un condensateur qui est localisé sur une carte avec les autres composants électroniques étant elle-même beaucoup plus simple.

L'invention concerne également une pompe à vide turbo-moléculaire à paliers magnétiques actifs comprenant un rotor monté sur des paliers magnétiques radiaux et un palier magnétique axial, **caractérisée en ce qu'**elle comprend un dispositif de détection de la position axiale du rotor sans bobine de compensation, tel que défini ci-dessus.

Brève description des dessins

D'autres caractéristiques et avantages de l'invention ressortiront de la description suivante de modes particuliers de réalisation, donnés à titre d'exemples non limitatifs en référence aux dessins annexés, sur lesquels :

- la figure 1 est une vue schématique en coupe axiale d'un exemple de détecteur axial selon l'invention ;
- la figure 2 est un schéma électrique des circuits d'alimentation et de mesure associés au dispositif de détection de la figure 1 ;
- la figure 3 est une courbe montrant l'évolution du signal de sortie en fonction du déplacement à mesurer pour un exemple de dispositif de détection selon l'invention ;
- la figure 4 montre des courbes analogues à celle de la figure 3 d'une part pour un dispositif selon l'invention 9 et, d'autre part, pour un dispositif connu avec bobine de compensation 109 ;
- la figure 5 est une vue schématique en coupe axiale d'un exemple de détecteur axial connu mettant en oeuvre une bobine de compensation ;
- la figure 6 est un schéma électrique des circuits d'alimentation et de mesure associés au dispositif de détection connu de la figure 5 ;
- la figure 7 est une courbe montrant l'évolution du signal de sortie en fonction du déplacement à mesurer pour un exemple de dispositif de détection connu selon les figures 5 et 6, et
- la figure 8 est une vue schématique en coupe axiale d'un exemple de pompe à vide turbo-moléculaire à paliers magnétiques à laquelle est applicable l'invention.

Description détaillée de modes particuliers de réalisation.

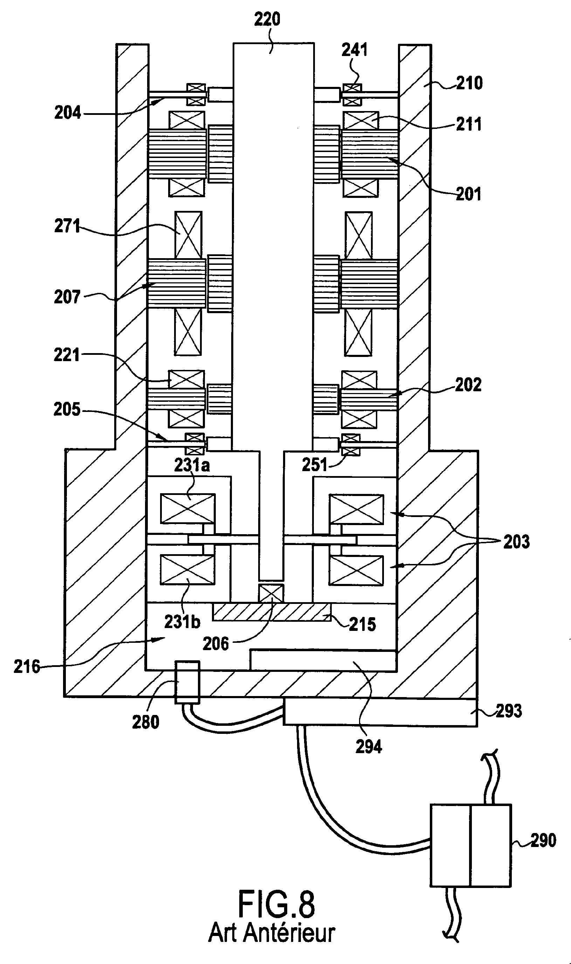

On décrira d'abord en référence à la figure 8 un exemple de pompe à vide turbo-moléculaire de l'art antérieur qui peut être modifiée conformément à l'invention, mais l'invention peut naturellement s'appliquer à d'autres types de machines tournantes devant être équipées d'un détecteur axial.

La pompe à vide turbo-moléculaire comprend une enceinte 210 définissant une chambre 216 à vide primaire, un rotor 220, un moteur électrique 207, un palier magnétique axial 203 et des paliers magnétiques radiaux 201, 202, un détecteur axial 206 et des détecteurs radiaux 204, 205.

Les stators des paliers magnétiques radiaux 201, 202 et le stator du moteur électrique 207 comprennent des enroulements 211, 221, 271 respectivement. Les stators de la butée axiale 203, situés de part et d'autre d'une armature rotorique en forme de disque perpendiculaire au rotor 220 et solidaire de celui-ci, comprennent des enroulements 231a, 231b.

Les détecteurs radiaux 204, 205 de type inductif comprennent des enroulements 241, 251 respectivement.

Le détecteur axial 206 de la figure 8, qui est symbolisé par un enroulement solidaire d'un support 215 et placé en regard de l'extrémité du rotor 220, est souvent réalisé dans l'art antérieur avec une bobine de compensation de la manière décrite plus haut en référence aux figures 5 à 7.

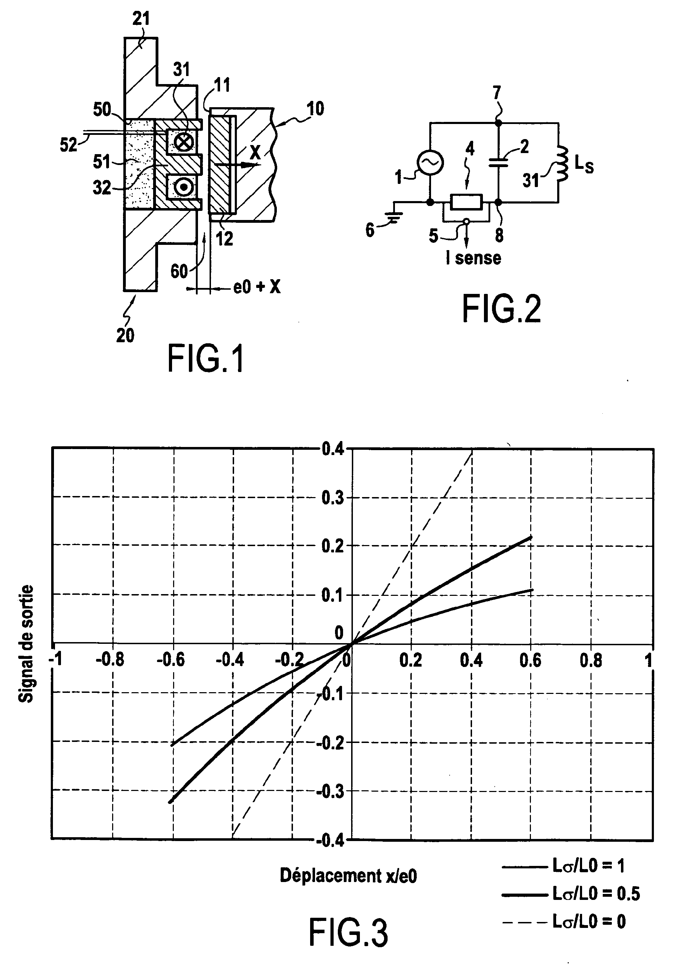

Selon la présente invention, le détecteur 206 est réalisé de façon spécifique conformément aux modes de réalisation qui seront décrits plus loin en référence aux figures 1 à 3.

Dans l'exemple d'application de la figure 8, on voit des circuits 294 de commande des paliers magnétiques axial 203 et radiaux 201, 202, à partir des signaux émis par les détecteurs axial 206 et radiaux 204, 205, qui sont surmoulés dans une résine et disposés à l'intérieur de l'enceinte 210 dans la chambre 216 à vide primaire et reliés par un connecteur électrique étanche 280 et des câbles électriques à des circuits extérieurs 293, 290, mais la présente invention est indépendante de la façon dont sont réalisés les circuits de commande et n'est donc pas limitée à cet exemple d'application.

Si l'on se reporte à la figure 1, on voit un exemple de réalisation de l'invention où une cible 12 en matériau ferromagnétique est disposée à l'extrémité 11 d'un arbre tournant 10 dont la position axiale est à mesurer. La cible 12 peut être en ferrite ou en une tôle ferromagnétique ou encore être constituée par un empilement de tôles ferromagnétiques.

Un stator 20 de détecteur est disposé de façon fixe en regard de la cible 12 en ménageant un entrefer 60 dont la valeur nominale $e_0$ peut être par exemple de l'ordre de 0,5 mm, et dont la valeur réelle $e_0 + x$ présente des variations de valeur x en fonction de la variation de position de l'arbre 10.

Le stator 20 de détecteur axial comprend une bobine d'induction 31 associée à un circuit magnétique 32 placé dans un logement 21 solidaire du bâti de la machine tournante équipée de l'arbre 10.

Le circuit magnétique 32 peut être constitué par un pot en ferrite dont les dimensions sont adaptées aux besoins mais qui peut présenter des valeurs traditionnelles (par exemple un diamètre de 14 mm). Le circuit magnétique 32 peut également être constitué par un empilement de tôles magnétiques. Contrairement aux réalisations de l'art antérieur décrites plus haut en référence aux figures 5 à 7, aucune bobine de compensation n'est associée à la bobine 31.

Les fils de connexion de la bobine 31 peuvent passer à travers un espace 50 qui peut être rempli d'une résine époxy 51.

La figure 2 montre un exemple de circuit d'alimentation de la bobine d'induction 31.

Une source de tension alternative 1 qui peut être constituée par un oscillateur simple, sans transformateur, est connectée entre une première extrémité 7 de la bobine 31 et un point 6 à une tension de référence, telle que la masse. Un condensateur 2 est connecté en parallèle sur la bobine 31 entre les première et deuxième extrémités 7, 8 de celle-ci.

Un dispositif de détection de courant (shunt) est interposé entre la deuxième extrémité 8 de la bobine 31 et le point 6 à ladite tension de référence telle que la masse. Le dispositif de détection permet de fournir sur une ligne une information iL sur la valeur du courant circulant entre l'extrémité 8 de la bobine 31 et le point 6 qui est à la masse (OV). L'information de courant iL représente la valeur d'une modification x de la largeur de l'entrefer 60.

La valeur C de la capacité du condensateur est donnée à partir de l'inductance $L_0$ de la bobine de détection 31 pour un entrefer 60 à la valeur nominale $e_0$, selon la formule suivante (où $\tilde{\varpi}$ représente la pulsation de signal délivré par l'oscillateur 1) :

$$C = 1/(\varpi^2 L_0) \qquad (5)$$

La valeur $L_s$ de l'inductance de la bobine de détection 31 pour un déplacement axial x de l'arbre 10 est donnée par la formule suivante, où $L_\sigma$ représente l'inductance de fuite :

$$L_s = L_0/(1 + x/e_0) + L_\sigma \qquad (6)$$

La valeur du courant de détection $i_L$ (ou $I_{sense}$) mesurée sur la ligne 5 du circuit de la figure 2, peut alors s'exprimer en fonction du déplacement axial x de l'arbre 10 selon la formule suivante :

$$i_L = \frac{u}{\varpi L_0} * \frac{x/e_0 + 1}{(L_\sigma/L_0)*(1 + x/e_0) + 1} - \frac{u}{\varpi(L_\sigma + L_0)} \qquad (7)$$

Dans le cas où l'inductance de fuite $L_\sigma$ peut être considérée comme négligeable ($L_\sigma/L_o \ll 1$), on a la relation suivante :

$$i_L = \frac{u * x/e_0}{\varpi L_0} \qquad (8)$$

Il ressort de la formule (8) ci-dessus que l'information de position x est proportionnelle au courant $i_L$ dans le pied du montage de la figure 2 (courant $I_{sense}$ prélevé sur la ligne 5).

Par rapport au dispositif de l'art antérieur tel que décrit en référence aux figures 5 et 6, on procède à une détection de courant au lieu d'une détection de tension, on utilise un condensateur dont la valeur de la capacité est facile à déterminer [en fonction de la valeur $L_0$ de l'inductance de la bobine 31 pour un entrefer 60 ayant la valeur nominale $e_0$ (voir l'équation (5))], ce qui n'implique aucun besoin d'ajustement, ni de bobine de compensation 141, contrairement à l'art antérieur.

On a représenté sur la figure 3 des courbes donnant la valeur du signal de sortie sur la ligne 5 en fonction du déplacement relatif $x/e_0$ pour trois cas d'inductance de fuite.

On constate que la linéarité de ces courbes de la figure 3 est beaucoup plus prononcée que celle des courbes correspondantes de la figure 7 correspondant à un dispositif de l'art antérieur avec bobine de compensation.

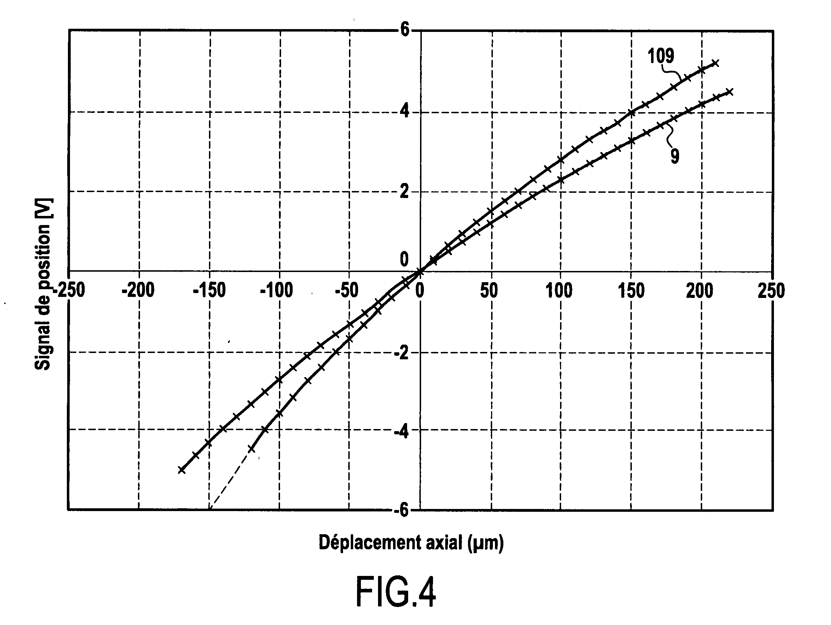

La figure 4 illustre la différence de linéarité constatée pour des courbes 9 et 109 représentant un signal de position (en volts) issu d'un dispositif de détection respectivement selon l'invention (figures 1 et 2) et selon l'art antérieur avec bobine de compensation (figures 5 et 6) en fonction du déplacement axial (en micromètres).

Si la linéarité de la courbe 9 n'est pas absolument parfaite à cause des inductances de fuite résiduelles, on constate que cette linéarité est améliorée de façon suffisamment sensible avec le dispositif selon l'invention pour pouvoir supprimer tout centrage mécanique, en utilisant un dispositif du type de celui des figures 1 et 2 qui est d'une structure simple, sans ajustage complexe et d'un coût réduit du fait de l'absence de bobine de compensation.

**Revendications**

1. Dispositif de détection de la position axiale d'un arbre tournant (10) de machine tournante, comprenant une cible (12) en matériau ferromagnétique disposée à l'extrémité dudit arbre tournant (10), une bobine d'induction (31) associée à un circuit magnétique fixe (32) rendu solidaire d'un bâti de la machine tournante et disposé en regard de la dite cible (12) en ménageant un entrefer (60), et un circuit d'alimentation de ladite bobine d'induction (31), **caractérisé en ce que** le circuit d'alimentation de la bobine d'induction (31) comprend une source de tension alternative (1) connectée entre une première extrémité (7) de la bobine d'induction (31) et une zone (6) située à une tension de référence (OV), au moins un condensateur (2) connecté entre ladite première extrémité (7) de la bobine d'induction (31) et une deuxième extrémité (8) de la bobine d'induction (31), et un dispositif de détection (4) interposé entre ladite deuxième extrémité (8) de la bobine d'induction (31) et ladite zone (6) située à ladite tension de référence (OV), pour fournir sur une ligne (5) une information ($i_L$) sur la valeur de courant circulant entre ladite deuxième extrémité (8) de la bobine d'induction (31) et ladite zone (6) située à la tension de référence (OV), ladite information ($i_L$) représentant la valeur d'une modification x de la largeur dudit entrefer (60) présentant une valeur nominale prédéterminée $e_0$.

2. Dispositif selon la revendication 1, **caractérisé en ce que** la valeur C de la capacité du condensateur (2) est donnée à partir de l'inductance $L_0$ de la bobine d'induction (31) pour un entrefer (60) à la valeur nominale $e_0$, selon la formule suivante, où $\overline{\omega}$ représente la pulsation de signal délivré par la source de tension alternative (1):

$$C = 1/(\varpi^2 L_0)$$

3. Dispositif selon la revendication 1 ou la revendication 2, **caractérisé en ce que** ladite cible (12) est en ferrite.

4. Dispositif selon la revendication 1 ou la revendication 2, **caractérisé en ce que** ladite cible (12) est constituée par une tôle ferromagnétique ou un empilement de tôles ferromagnétiques.

5. Dispositif selon l'une quelconque des revendications 1 à 4, **caractérisé en ce que** ledit circuit magnétique fixe (32) est en ferrite.

6. Dispositif selon l'une quelconque des revendications 1 à 4, **caractérisé en ce que** ledit circuit magnétique fixe (32) est constitué par un empilement de tôles ferromagnétiques.

7. Dispositif selon l'une quelconque des revendications 1 à 6, **caractérisé en ce que** des fils de connexion (52) de la bobine d'induction (31) sont disposés dans un espace (50) rempli d'une résine époxy.

8. Dispositif selon l'une quelconque des revendications 1 à 7, **caractérisé en ce que** la source de tension alternative (1) est un simple oscillateur sans transformateur.

9. Dispositif selon l'une quelconque des revendications 1 à 8, **caractérisé en ce que** ladite tension de référence est égale à 0 volt.

10. Pompe à vide turbo-moléculaire à paliers magnétiques actifs comprenant un rotor (220) monté sur des paliers magnétiques radiaux (201, 202) et un palier magnétique axial (203), **caractérisée en ce qu'**elle comprend un dispositif de détection de la position axiale du rotor selon l'une quelconque des revendications 1 à 9.

**Patentansprüche**

1. Vorrichtung zur Erfassung der Axialposition einer drehenden Welle (10) einer Drehmaschine, umfassend ein Ziel (12) aus einem ferromagnetischen Material, das am Ende der drehenden Welle (10) angeordnet ist, eine Induktionsspule (31), die mit einer festen Magnetschaltung (32) verbunden ist, die mit einem Gehäuse der Drehmaschine verbunden wird und gegenüber dem Ziel (12) angeordnet ist, wobei ein Magnetspalt (60) ausgenommen wird, und eine Versorgungsschaltung der Induktionsspule (31),
   **dadurch gekennzeichnet, dass** die Versorgungsschaltung der Induktionsspule (31) eine Wechselspannungsquelle (1), die zwischen einem ersten Ende (7) der Induktionsspule (31) und einer Zone (6) angeschlossen ist, die eine Referenzspannung (OV) aufweist, mindestens einen Kondensator (2), der zwischen dem ersten Ende (7) der Induktionsspule (31) und einen zweiten Ende (8) der Induktionsspule (31) angeschlossen ist, und eine Erfassungsvorrichtung (4) umfasst, die zwischen dem zweiten Ende (8) der Induktionsspule (31) und der Zone (6) angeordnet ist, die die Referenzspannung (OV) aufweist, um auf einer Leitung (5) eine Information ($i_L$) über den Stromwert zu liefern, der zwischen dem zweiten Ende (8) der Induktionsspule (31) und der Zone (6), die die Referenzspannung (OV) aufweist, zirkuliert, wobei die Information ($i_L$) den Wert einer Veränderung x der Breite des Magnetspalts (60) darstellt, der einen vorbestimmten Nominalwert $e_0$ aufweist.

2. Vorrichtung nach Anspruch 1, **dadurch gekennzeichnet, dass** der Wert C der Kapazität des Kondensators (2) aus der Induktanz $L_0$ der Induktionsspule (31) für einen Magnetspalt (60) mit Nominalwert $e_0$ nach folgender Formel gegeben ist, wobei w die Signalpulsation darstellt, die von der Wechselspannungsquelle (1) geliefert wird:

$$C = 1/(\omega^2 L_0)$$

3. Vorrichtung nach Anspruch 1 oder Anspruch 2, **dadurch gekennzeichnet, dass** das Ziel (12) aus Ferrit besteht.

4. Vorrichtung nach Anspruch 1 oder Anspruch 2, **dadurch gekennzeichnet, dass** das Ziel (12) von einem ferromagnetischen Blech oder einer Stapelung von ferromagnetischen Blechen gebildet ist.

5. Vorrichtung nach einem der Ansprüche 1 bis 4, **dadurch gekennzeichnet, dass** die feste Magnetschaltung (32) aus Ferrit besteht.

6. Vorrichtung nach einem der Ansprüche 1 bis 4, **dadurch gekennzeichnet, dass** die feste Magnetschaltung (32) von einer Stapelung von ferromagnetischen Blechen gebildet ist.

7. Vorrichtung nach einem der Ansprüche 1 bis 6, **dadurch gekennzeichnet, dass** Anschlussdrähte (52) der Induktionsspule (31) in einem mit einem Epoxy-Harz gefüllten Raum (50) angeordnet sind.

8. Vorrichtung nach einem der Ansprüche 1 bis 7, **dadurch gekennzeichnet, dass** die Wechselspannungsquelle (1) ein einfacher Oszillator ohne Transformator ist.

9. Vorrichtung nach einem der Ansprüche 1 bis 8, **dadurch gekennzeichnet, dass** die Referenzspannung gleich 0 Volt ist.

10. Turbomolekularvakuumpumpe mit aktiven Magnetlagern, umfassend einen Rotor (220), der auf radialen Magnetlagern (201, 202) montiert ist, und ein axiales Magnetlager (203), **dadurch gekennzeichnet, dass** sie eine Vorrichtung zur Erfassung der Axialposition des Rotors nach einem der Ansprüche 1 bis 9 umfasst.

## Claims

1. A device for detecting the axial position of a rotary shaft (10) of a rotary machine, the device comprising a target (12) of ferromagnetic material placed at the end of said rotary shaft (10), an induction coil (31) associated with a stationary magnetic circuit (32) secured to a structure of the rotary machine and placed facing said target (12) while leaving an airgap (60), and a power supply circuit for powering said induction coil (31), the device being **characterized in that** the circuit for powering the induction coil (31) comprises an AC voltage source (1) connected between a first end (7) of the induction coil (31) and a zone (6) situated at a reference voltage (0 V), at least one capacitor (2) connected between said first end (7) of the induction coil (31) and a second end (8) of the induction coil (31), and a detector device (4) interposed between said second end (8) of the induction coil (31) and said zone (6) situated at said reference voltage (0 V), in order to deliver on a line (5) information ($i_L$) about the magnitude of the current flowing between said second end (8) of the induction coil (31) and said zone (6) situated at the reference voltage (0 V), said information ($i_L$) representing the value of a modification $\underline{x}$ to the width of said airgap (60) that presents a predetermined nominal value $e_0$.

2. A device according to claim 1, **characterized in that** the capacitance C of the capacitor (2) is given by the inductance $L_0$ of the induction coil (31) for an airgap (60) having a nominal value $e_0$ by the following formula in which $\omega$ represents the angular frequency of the signal delivered by the AC voltage source (1):

$$C = 1/(\omega^2 L_0)$$

3. A device according to claim 1 or claim 2, **characterized in that** said target (12) is made of ferrite.

4. A device according to claim 1 or claim 2, **characterized in that** said target (12) is constituted by a ferromagnetic lamination or by a stack of ferromagnetic laminations.

5. A device according to any one of claims 1 to 4, **characterized in that** said stationary magnetic circuit (32) is made of ferrite.

6. A device according to any one of claims 1 to 4, **characterized in that** said stationary magnetic circuit (32) is constituted by a stack of ferromagnetic laminations.

7. A device according to any one of claims 1 to 6, **characterized in that** connection wires (52) of the induction coil (31) are arranged in a space (50) filled with an epoxy resin.

8. A device according to any one of claims 1 to 7, **characterized in that** the AC voltage source (1) is a simple oscillator without a transformer.

9. A device according to any one of claims 1 to 8, **characterized in that** said reference voltage is equal to 0 volt.

10. A turbo-molecular vacuum pump with active magnetic bearings, the pump comprising a rotor (220) mounted on radial magnetic bearings (201, 202) and on an axial magnetic bearing (203), the pump being **characterized in that** it includes a detector device for detecting the axial position of the rotor according to any one of claims 1 to 9.

FIG.1

FIG.2

I sense

FIG.3

Signal de sortie

Déplacement x/e0

—— Lσ/L0 = 1
—— Lσ/L0 = 0.5
– – – Lσ/L0 = 0

FIG.4

152 121 122
150
132
142 131
143 111 110
141 X
151
112
170
160
e0 e0 + X
120
FIG.5
Art Antérieur

101 Ls 131
105
106 108
V sense
102 Lc 141

FIG.6
Art Antérieur

Signal de sortie

Déplacement x/e0

—— Lσ/L0 = 1
—— Lσ/L0 = 0.5
– – – Lσ/L0 = 0

FIG.7
Art Antérieur

FIG.8
Art Antérieur

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005038263 A1
- EP 0470637 A1
- FR 2936287 A1
- EP 1580889 A1
- EP 0311128 A1